# EUROPÄISCHE PATENTSCHRIFT

(11) **EP 0 426 803 B1**
(45) Veröffentlichungstag und Bekanntmachung des Hinweises auf die Patenterteilung: **29.12.1993**
(21) Anmeldenummer: 90907051.8
(22) Anmeldetag: 18.05.1990
(51) Int. Cl.: G01M 3/26

(54) **Leckageüberwachung für hydraulische Antriebssysteme**
Leak detection for hydraulic drive systems
Contrôle de fuite pour systèmes d'entraînement hydrauliques

(30) Priorität: 19.05.1989 DE 3916382; 18.07.1989 DE 8908692 U
(43) Veröffentlichungstag der Anmeldung: 15.05.1991
(73) Patentinhaber: KUNZE, Silvia, D-46244 Bottrop (DE)
(72) Erfinder: KUNZE, Hans-Jürgen, D-4250 Bottrop-Kirchhellen (DE); FRANCUZ, Josip, D-4130 Moers 1 (DE)
(74) Vertreter: Zenz, Joachim Klaus, Dipl.-Ing.
(86) Internationale Anmeldenummer: EP9000809
(87) Internationale Veröffentlichungsnummer: WO9014584

(56) Entgegenhaltungen:
- Patent Abstracts of Japan, Band 7, Nr. 23 (P-171)(1168), 29, January 1983, & JP-A-57175935
- Patent Abstracts of Japan, Band 12, Nr. 394 (P-773)(3241), 20. Oktober 1988, & JP-A-63134931

## Beschreibung

Die Erfindung betrifft ein Verfahren zum Betreiben eines hydraulischen Maschinenaggregats, das über mindestens eine Leitung wahlweise mit einem Tank oder einer Pumpe verbunden wird, wobei der Druck in der Leitung auf einen Restdruck abfällt, wenn die Leitung beim Maschinenleerlauf an den Tank angeschlossen wird. Ferner betrifft die Erfindung ein hydraulisches Antriebssystem für insbesondere im untertägigen Bergbau eingesetzte Arbeitsmaschinen, mit einem Tank, einer daran anschließenden Pumpe und zu einem Maschinenaggregat führenden Leitungen für den Hin- und den Rücklauf der Hydraulikflüssigkeit, wobei die Leitungen von einer Steuereinrichtung abgehen. Derartige Verfahren und Antriebssysteme sind aus der Praxis bekannt.

Bei hydraulischen Antriebssystemen für im untertägigen Bergbau eingesetzte Arbeitsmaschinen besteht das Problem, daß Schäden an den zugeordneten Schlauchleitungen einerseits vergleichsweise häufig auftreten, weil die Schlauchleitungen bei den unter Tage herrschenden Betriebsbedingungen einer äußeren Beanspruchung ausgesetzt sind, und daß andererseits die Schäden an den Schlauchleitungen nur schwierig festzustellen und zu lokalisieren sind, weil die Schlauchleitungen entweder im Bereich der Arbeitsmaschine selbst oder aber aufgrund der vorliegenden Betriebsbedingungen nicht oder nur schwer sichtbar bzw. zugänglich sind.

Betrachtet man beispielsweise die vorgenannte Problematik bei einer sog. Teilschnittmaschine als Streckenvortriebsmaschine, so ergibt sich insbesondere eine für die Verhältnisse unter Tage durchaus typische Beanspruchung der Maschinenaggregate durch das freigeschnittene Haufwerk, welches an die teilweise freiliegenden Schlauchleitungen gelangt und eine äußere mechanische Beanspruchung der Schläuche herbeiführt. Zusätzlich sind durchaus auch die im oder am Maschinenkörper teilweise verdeckt geführten Schlauchleitungen betroffen, da die Teilschnittmaschine auch im Haufwerk fährt und arbeitet, so daß die Haufwerksteile auch an die im Maschinenbereich geführten Schlauchleitungen gelangen.

Während auftretende Schlauchbrüche durch die bei hohem Betriebsdruck im Antriebssystem sichtbar austretende Hydraulikflüssigkeit noch verhältnismäßig leicht erkennbar und vor allem ihrem Auftreten nach lokalisierbar sind, besteht ein erhebliches Problem in der Erkennung kleinerer Leckstellen, die als solche auch beim Betrieb der Maschine kaum erkannt und lokalisiert werden können. So treten derartige kleine Leckagen unbemerkt auch beim Leerlauf des Antriebsaggregats bzw. der Maschine auf, bei dem ein Leerlaufdruck im hydraulischen System in der Größenordnung von beispielsweise 3 bar unterstellt werden kann, ferner auch bei Arbeitsabläufen an der Maschine hinsichtlich aller daran nicht beteiligten und daher dem Betriebsdruck nicht unterlilegenden Aggregate, weil insoweit ein Funktionsausfall der betroffenen Aggregate nicht auftritt. Daher werden derartige kleinere Leckstellen häufig erst im Wege des Feststellens eines überdurchschnittlichen "Verbrauchs" an Hydraulikflüssigkeit vermutet bzw. erkannt und können nur im Rahmen eines Maschinenstillstandes beseitigt werden.

Die Problematik der Leckverluste ist allerdings nicht auf die vorstehend diskutierten, im untertägigen Bergbau eingesetzten Arbeitsmaschinen beschränkt, sondern gilt grundsätzlich für sämtliche mit Hydraulikflüssigkeit betriebenen Aggregate. In jedem Falle beeinträchtigen Leckverluste nicht nur die Wirtschaftlichkeit des Betriebes, sondern stellen auch eine nicht zu unterschätzende Umweltbelastung dar, da die hydraulischen Flüssigkeiten als aggressive Schadstoffe anzusehen sind.

Aus der Veröffentlichung "Patent Abstracts of Japan", Bd. 7, Nr. 23, ist ein pneumatisches System zum Messen von Leckmengen bekannt, bei dem zum Zwecke der Messung der Verbraucher abgeschaltet und sodann die Versorgungsleitung abgesperrt werden muß. Es wird also eine mengemäßige Erfassung der Leckverluste ermöglicht, allerdings bei stillgesetztem Betrieb. Ähnliche Verhältnisse beschreibt die Veröffentlichung "Patent Abstracts of Japan", Bd. 12, Nr 394. Hier dienen zwei Ventile zum Absperren eines Leitungsabschnitts, woraufhin der Druck in dem Leitungsabschnitt überwacht wird. Auf diese Weise läßt sich die Dichtheit des stromab gelegenen Ventils testen.

Der Erfindung liegt die Aufgabe zugrunde, eine hydraulische Leckageüberwachung zu schaffen, mit der schon geringe Leckagen im Leitungssystem ohne Unterbrechung des Betriebs des Maschinenaggregats erkennbar sind.

Die Lösung dieser Aufgabe ergibt sich einschließlich vorteilhafter Ausgestaltungen und Weiterbildungen aus dem Inhalt der Patentansprüche, welche dieser Beschreibung vorangestellt sind.

Der Erfindung liegt die Erkenntnis zugrunde, daß die Stillstandszeiten der Maschinenaggregate, in denen diese abgeschaltet, bzw. vorübergehend nicht mit dem Arbeitsdruck beaufschlagt sind, dazu benutzt werden können, die Dichtheit der Leitungen sicherzustellen. Hierzu wird in den Leitungen ein Mindestdruck eingestellt, der mindestens auf der Höhe des von dem Hydrauliksystem vorgegebenen Vorspanndruck liegt. Dies bedeutet, daß die Leitung sich zum Tank hin nicht weiter als bis zum vorgewählten Mindestdruck entlasten kann. Sinkt nun der Druck innerhalb der Leitung dennoch unter den Mindestdruck, so ist dies ein Zeichen dafür, daß eine Leckage aufgetreten ist. Auf diese Weise lassen sich auch geringfügige Undichtigkeiten frühzeitig erkennen und lokalisieren. Einem gravierenden Leitungsbruch mit entsprechendem Verlust an Hydraulikflüssigkeit bzw. mit entsprechender Umweltbelastung kann also vorgebeugt werden.

Die Erfindung geht dabei von dem Grundgedanken aus, daß in jeder Anschlußleitung zu einem Maschinenaggregat ein Halteventil mit einem wenigstens dem beim Maschinenleerlauf in den Leitungen herrschenden Vorspanndruck entsprechend eingestellten Öffnungsdruck sowie zwischen jedem Halteventil und dem Maschinenaggregat ein Druckmeßwertgeber angeordnet ist, wobei der ermittelte Meßwert einer Einrichtung zum Vergleich des Ist-Wertes mit dem als Druck-Sollwert vorgegebenen Öffnungsdruck übertragen wird.

Mit der Erfindung ist dabei zunächst der Vorteil verbunden, daß mit dem nun im Bereich der Schlauchleitungen meßbaren Druckabfall auch beim Maschinenleerlauf außerhalb der Funktionsansteurungen des betreffenden Maschinenaggregats auch kleinere Leckagen festgestellt werden können. Damit ergibt sich in vorteilhafter Weise die Möglichkeit, im Wege einer vorbeugenden Wartung zunächst auch schon nur leichter beschädigte Schläuche oder Leitungen auszuwechseln und so einen totalen Schlauchbruch und den damit zwangsläufig verbundenen Stillstand der Maschine zu vermeiden. Ein weiterer Vorteil besteht darin, daß auch während des Ablaufs von Arbeitsvorgängen der Maschine nun einzelne, nicht dem Betriebsdruck unterliegende Schläuche oder Leitungen ausgewechselt werden können, da alle mit jeweils nicht am Arbeitslauf der Maschine beteiligten Aggregaten in Zusammenhang stehenden Schläuche gegen den Vorspanndruck durch die Halteventile abgeriegelt sind, so daß sie insoweit auch während des sonstigen Betriebs der Maschine ausgewechselt werden können. Auch dieser Vorteil ist im Rahmen der vorbeugenden Wartung von großem Gewicht.

Für die Erkennung und Lokalisierung von kleineren Leckagen ist es ausreichend, die Halteventile auf einen Druck auszulegen, der dem im Maschinenleerlauf herrschenden Vorspanndruck in den Leitungen entspricht, so daß erst bei Ansteuerung des an die betreffenden Hydraulikschläuche angeschlossenen Maschinenaggregats die Schlauchleitungen dem dann zuzuschaltenden Betriebsdruck unterworfen werden, wobei das Halteventil bei angesteuertem Betriebsdruck den Weg für die Hydraulikflüssigkeit freigibt. Steht das Maschinenaggregat nicht unter Betriebsdruck, so herrscht in dem zugeordneten Schlauchleitungssystem der Vorspanndruck, der von den im Schlauchleitungssystem angeordneten Meßwertgebern ermittelt wird. Damit steht ein ist-Wert zur Verfügung, der dem eingestellten Soll-Wert in Höhe des Vorspanndrucks entsprechen muß, wenn kein Leck vorhanden ist. Ergibt der Vergleich des vorgegebenen Soll-Wertes in Höhe des Vorspanndrucks mit dem vom Meßwertgeber ermittelten Ist-Wert für den im Schlauchleitungssystem herrschenden Druck eine Abweichung in Richtung eines Druckabfalls im Schlauchleitungssystem, so kann dieser Druckabfall nur hervorgerufen sein durch über ein Leck austretende Hydraulikflüssigkeit. Diese Soll/Ist-Abweichung kann dann von der Einrichtung in ein akustisches und/oder optisches Signal zur Fehlererkennung umgesetzt werden.

Nach Ausführungsbeispielen der Erfindung ist vorgesehen, auch mehrere Halteventile mit zugeordneten Meßwertgebern unter Bildung von Leitunghsabschnitten hintereinander anzuordnen, um die Lokalisierung der Leckagestelle zu erleichtern; gleiches gilt für mittels Leitungsverzweigungen im Verbund geschaltete Maschinenaggregate, bei denen dann hinter jeder Verzweigung ein Halteventil mit Meßwertgeber anzuordnen ist.

Die Erfindung verwendet Ventilvorrichtungen, die an einer Mehrzahl von beliebigen hydraulischen Maschinenaggregaten zum Einsatz kommen können, insbesondere allerdings an doppelt wirkenden Kolbenarbeitsmaschinen, von denen jede zwei Leitungen benötigt. Bevorzugtes Anwendungsgebiet sind, wie erwähnt, solche Vorrichtungen, bei denen die Leitungen oder Schläuche verdeckt verlaufen und/oder äußeren Einwirkungen ausgesetzt sind, wie etwa bei Erdarbeiten im Straßenbau und insbesondere im Bergbau.

Die Ventilvorrichtungen können für jede Leitung eine gesonderte Ventileinheit vorsehen. Sie werden dann allerdings schwer, kostenintensiv und platzaufwendig.

Erfindungsgemäß wird eine Ventilvorrichtung geschaffen, die leichter und kleiner ist und die sich kostengünstiger fertigen läßt.

Hierzu ist die Ventilvorrichtung nach der Erfindung dadurch gekennzeichnet, daß sie einen plattenförmigen Block bildet, in welchem die Zweige jeder Leitung unter einem Winkel zueinander auf das zugehörige Halteventil zulaufen, wobei die zu der Steuereinrichtung führenden Zweige in einander gegenüberliegenden Schmalseiten und die zu dem hydraulischen Maschinenaggregat führenden Zweige in eine gemeinsame dritte Schmalseite des Blocks eintreten, und wobei ferner die Zweige der ersten Leitung relativ zu denen der zweiten Leitung sowohl in Richtung der einander gegenüberliegenden Schmalseiten als auch quer zum plattenförmigen Block gegeneinander versetzt sind.

Eine derartige Anordnung der einzelnen Leitungszweige und Bauteile in und an dem plattenförmigen Block gewährleistet eine minimale Baugröße. Auch läßt sich der Block in einer geringen Anzahl von Arbeitsgängen bearbeiten und vorbereiten, so daß auch die Herstellungskosten minimiert werden können.

Diese Vorteile können dadurch verstärkt werden, daß die Zweige jeder Leitung rechtwinklig zueinander verlaufen, wobei vorzugsweise gleiche Zweige der beiden Leitungen parallel zueinander verlaufen.

Die Halteventile können in Ausnehmungen eingebaut werden, die sich quer zum plattenförmigen Block erstrecken. Vorteilhafter hingegen ist es, daß die Halteventile in Bohrungen in einer der dritten Schmalseite gegenüberliegenden vierten Schmalseite eingesetzt sind. Diese Bohrungen stellen nur einen geringfügig erhöhten Arbeitsaufwand dar, und zwar insbesondere dann, wenn sie Fortsetzungen der zu dem Maschinenaggregat führenden Zweige bilden.

Die Anordnung der Druckmeßwertgeber ist beliebig. Vorzugsweise allerdings sind die Druckmeßwertgeber an einer derjenigen Schmalseiten angeordnet, in die mindestens einer der zur Steuereinrichtung führenden Zweige eintritt. Sie können dann in günstiger Weise nebeneinander auf dem Block angeordnet werden.

Die Erfindung wird im folgenden bevorzugter Ausführungsbeispiele im Zusammenhang mit der beiliegenden Zeichnung näher erläutert. Die Zeichnung zeigt in:

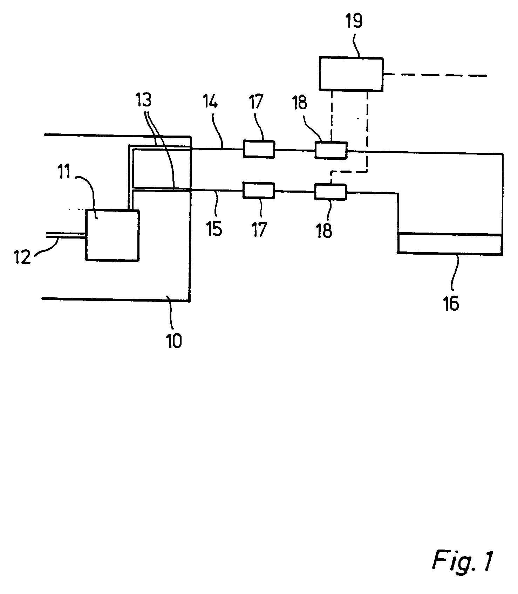

- Fig. 1: ein hydraulisches Antriebssystem in einer schematischen Darstellung seiner zugehörigen Komponenten;
- Fig. 2: eine Vorderansicht einer erfindungsgemäßen Ventilvorrichtung; und
- Fig. 3: eine zugehörige Seitenansicht, gesehen von rechts in Figur 2.

Auf einer Steuereinrichtung 10 mit einer Pumpe 11 und einen Tankanschluß 12 führen fest verrohrte Leitungen 13 zu Anschlüssen, von denen als Schläuche ausgebildete Leitungen 14, 15 zu einem beispielhaft dargestellten Maschinenaggregat 16 abgehen; bei dem Maschinenaggregat 16 kann es sich beispielsweise im Fall einer Teilschnittmaschine als Arbeitsmaschine um den Ladeklappenzylinder an der Ladeschürze der Teilschnittmaschine handeln.

Sowohl in der Leitung 14 als auch in der Leitung 15 ist jeweils ein Halteventil 17 eingeschaltet, vorzugsweise unmittelbar hinter dem Anschluß an die Leitungen 13 der Steuereinrichtung 10, der ein Meßwertgeber 18 für die Erfassung des jeweils in der Leitung 14, 15 herrschenden Druckes zugeordnet ist, welcher seinerseits die ermittelten Ist-Werte für den in den Leitungen herrschenden Druck einer Rechner-Einrichtung 19 übermittelt, in der ein Vergleich des Ist-Wertes mit einem vorgegebenen Soll-Wert erfolgt. Wegen der wechselnden Beaufschlagung der Leitungen 14, 15 in Abhängigkeit von dem jeweiligen Betriebszustand des Maschinenaggregates 16 müssen die Halteventile 17 doppelt, das heißt in beiden Richtungen wirkend ausgelegt sein.

Nach der Erfindung kann der in der Einrichtung 19 vorgegebene Soll-Wert dem von der Pumpe 11 bei Leerlaufleistung erzeugten Vorspanndruck entsprechen, der beispielsweise bei einer Teilschnittmaschine üblicher Auslegung bei etwa 3 bar liegt. Auf diesen Druck ist auch der Öffnungsdruck des jeweiligen Halteventils 17 ausgelegt, welches bei Überschreiten des Vorspanndrucks bei Ansteuerung der Arbeitsfunktion des Maschinenaggregats 16 die zugeordneten Leitungen 14, 15 freigibt.

In der Nicht-Funktionsstellung des Maschinenaggregats 16 muß bei geschlossenem Halteventil 17 in den Leitungen 14, 15 zwischen dem Aggregat 16 und der Steuereinrichtung 10 jeweils auch der Vorspanndruck von 3 bar anstehen. Wird demnach in der Null-Stellung des Maschinenaggregats 16 von dem Meßwertgeber 18 ein Ist-Wert ermittelt, der in Übereinstimmung mit dem in der Rechner Einrichtung 19 vorgegebenen Soll-Wert steht, so liegt kein Leck vor; wird von dem Meßwertgeber 18 ein Ist-Wert der Einrichtung 19 übermittelt, der unter dem Soll-Wert liegt, so kann der damit festgestellte Druckabfall in den Leitungen 14, 15 nur durch ein Leck in den Leitungen und dadurch austretende Hydraulikflüssigkeit bedingt sein, so daß auch bei Soll/Ist-Abweichung geringeren Ausmaßes sehr frühzeitig die Feststellung eines Lecks ermöglicht ist.

Eine entsprechend in der Einrichtung 19 festgestellte Soll/Ist-Abweichung wird als optisches und/oder akustisches Signal sichtbar gemacht, wobei nach der Erfindung auch vorgesehen sein kann, daß entsprechende Signal an die Grubenwarte als zentrale Überwachungsstelle für die im Untertagebereich eingesetzten Maschinen weiterzuleiten.

Wie in der zeichnerischen Darstellung der Einfachheit halber nicht weiter dargestellt, ist nach der Erfindung vorgesehen, in alle jeweils von der Steuereinrichtung 10 wegführenden Leitungen in Verbindung mit Maschinenaggregaten Halteventile mit zugeordneten Meßwertgebern einzuschalten; es unterfällt auch dem Gedanken der Erfindung, bei langen Schlauchleitungen dadurch überwachbare Abschnitte herzustellen, daß Halteventile mit zugeordneten Meßwertgebern hintereinander angeordnet sind; eine gleiche Überwachung ergibt sich auch für Leitungsverzweigungen, bei denen hinter den entsprechenden Knotenpunkten Halteventile und zugeordnete Meßwertgeber vorzusehen sind.

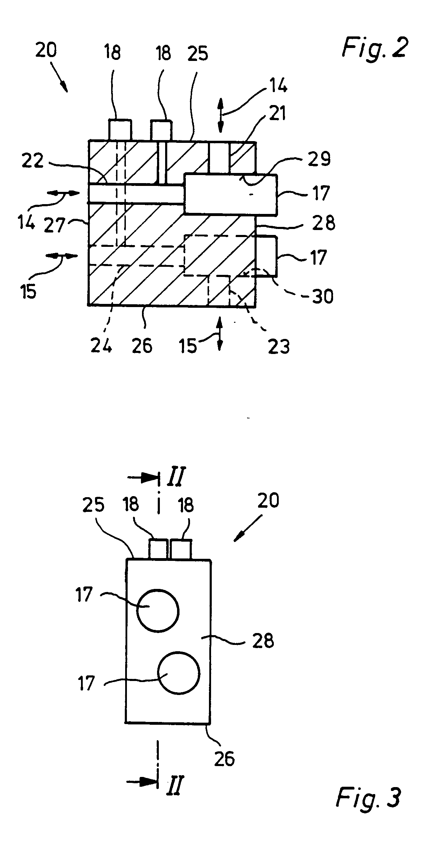

Die Ventilvorrichtung nach den Figuren 2 und 3 bildet einen plattenförmigen Block 20 für die Leitungen 14 und 15, die als Schläuche zwischen der Steuereinrichtung und dem hydraulischen Maschinenaggregat, im vorliegenden Fall einer doppelwirkenden hydraulischen Kolbenarbeitsmaschine, verlaufen. Die Leitung 14 bildet innerhalb des Blockes 20 einen zur Steuereinrichtung führenden Zweig 21 und einen zum hydraulischen Maschinenaggregat führenden Zweig 22. Gleichermaßen bildet die Leitung 15 einen zur Steuereinrichtung führenden Zweig 23 und einen zum hydraulischen Maschinenaggregat führenden Zweig 24. Die Zweige 21 und 22 der Leitung 14 und die Zweige 23 und 24 der Leitung 15 stehen je über eines der Halteventile 17 miteinander in Verbindung. Die Zweige 21 und 23 münden in einander gegenüberliegenden Schmalseiten 25 und 26 des Blockes 20. Die Zweige 22 und 24 hingegen münden in einer gemeinsamen dritten Schmalseite 27. In einer dieser gegenüberliegenden vierten Schmalseite 28 sind Bohrungen 29 und 30 ausgebildet, die die Halteventile 17 aufnehmen. Die Bohrungen 29 und 30 bilden Fortsetzungen der Zweige 22 bzw. 24. Letztere sind rechtwinklig zu den zugehörigen Zweigen 21 bzw. 23 ausgebildet. An die Zweige 22 und 24 sind die Meßwertgeber 18 angeschlossen. Die Zweige 21 und 23 einerseits und 22 und 24 andererseits verlaufen parallel zueinander.

Insgesamt sind die Anordnungen - bis auf die Meßwertgeber 18 - spiegelbildlich zueinander ausgebildet und einerseits in Richtung der Schmalseiten 25 und 26 sowie andererseits quer zum plattenförmigen Block 20 gegeneinander versetzt. Letzteres ergibt sich am deutlichsten aus Figur 2.

Auf diese Weise wird eine einfach zu fertigende, kompakte und dementsprechend leichtgewichtige und platzsparende Anordnung erzielt, die die erforderlichen Funktionen erfüllt. Wenn einer der zum Maschinenaggregat führenden Zweige 22 und 24 nicht unter Betriebdruck steht, stellt das zugehörige Halteventil 17 den vorbestimmten Druck in diesen Zweig ein. Sobald der zugehörige Meßwertgeber 18 ein Abfallen des eingestellten Druckes bemerkt, ist dies ein Zeichen dafür, daß der überwachte Schlauch ein Leck aufweist. Jedes Halteventil entspricht in seiner Funktion einem Paar entgegengesetzt wirkender Rückschlagventile, die auf den vorbestimmten Druck eingestellt sind.

Im Rahmen der Erfindung sind ohne weiteres Abwandlungen der beschriebenen Ausführungsform möglich. So können die spiegelbildlichen Anordnungen umgekehrt werden. Ferner können die Winkel zwischen den Zweigen 21 und 22 bzw. 23 und 24 anders als rechtwinklig sein. Gleiches gilt für die von den Meßwertgebern 18 zu den Zweigen 22 bzw. 24 führenden Leitungsabschnitte. Auch müssen die Meßwertgeber 18 nicht auf einer gemeinsamen Schmalseite sitze, und sie können ferner in den Block 20 versenkt werden. Schließlich sei hervorgehoben, daß der Block 20 keineswegs eine rechteckige Form haben muß. Vielmehr können die Schmalseiten unter beliebigen Winkel zueinander stehen und auch von einzelnen, gegeneinander abgewickelten Abschnitten gebildet werden.

## Patentansprüche

1. Verfahren zum Betreiben eines hydraulischen Maschinenaggregats, das über mindestens eine Leitung wahlweise mit einem Tank oder einer Pumpe verbunden wird, wobei der Druck in der Leitung auf einen Restdruck abfällt, wenn die Leitung beim Maschinenleerlauf an den Tank angeschlossen wird,
**dadurch gekennzeichnet**,
daß der beim Anschluß der Leitung an den Tank auftretende Druckabfall auf einen Soll-Restdruck begrenzt wird, daß der Ist-Restdruck in der Leitung gemessen und mit dem Soll-Restdruck verglichen wird und daß beim Absinken des Ist-Restdrucks unter den Soll-Restdruck eine Leckage angezeigt wird.

2. Hydraulisches Antriebssytem für Arbeitsmaschinen mit einem Tank, einer daran anschließenden Pumpe und zu einem Maschinenaggregat führenden Leitungen für den Hin- und Rücklauf der Hydraulikflüssigkeit, wobei die Leitungen von einer Steuereinrichtung abgehen, dadurch gekennzeichnet, daß in jeder zu einem Maschinenaggregat (16) führenden Leitung (14, 15) ein Halteventil (17) mit einem wenigstens dem beim Maschinenleerlauf in den Leitungen herrschenden Vorspanndruck entsprechend eingestellten Öffnungsdruck sowie zwischen jedem Halteventil (17) und dem Maschinenaggregat (16) ein Druckmeßwertgeber (18) angeordnet sind, wobei der ermittelte Meßwert einer Einrichtung (19) zum Vergleich des Ist-Wertes mit dem als Druck-Sollwert vorgegebenen Öffnungsdruck übertragen wird.

3. Antriebssystem nach Anspruch 2, dadurch gekennzeichnet, daß in einer zu einem Maschinenaggregat (16) führenden Leitung (14, 15) mehrere Halteventile (17) und Druckmeßwertgeber (18) unter Bildung von Leitungsabschnitten in Reihenschaltung angeordnet sind.

4. Antriebssystem nach Anspruch 2 oder 3, dadurch gekennzeichnet, daß nach jeder Verzweigung einer Leitung (14, 15) ein Halteventil (17) mit nachgeschaltetem Druckmeßwertgeber (18) angeordnet ist.

5. Antriebssystem nach einem der Ansprüche 2 bis 4, dadurch gekennzeichnet, daß in jeder von der Steuereinrichtung (10) wegführenden Leitung (14, 15) jeweils ein Halteventil (17) mit zugeschaltetem Druckmeßwertgeber (18) angeordnet ist.

6. Antriebssystem nach einem der Ansprüche 2 bis 5, dadurch gekennzeichnet, daß der in der Einrichtung (19) als Soll-Wert vorgegebene Öffnungsdruck dem beim Maschinenleerlauf herrschenden Vorspanndruck entspricht.

7. Antriebssystem nach einem der Ansprüche 2 bis 6, dadurch gekennzeichnet, daß die Einrichtung (19) bei einer festgestellten Soll/Ist-Abweichung die Abgabe eines akustischen Signals bewirkt.

8. Antriebssystem nach einem der Ansprüche 2 bis 7, dadurch gekennzeichnet, daß die Einrichtung (19) bei einer festgestellten Soll/Ist-Abweichung ein optisches Signal zur Fehlererkennung abgibt.

9. Antriebssystem nach einem der Ansprüche 2 bis 8, dadurch gekennzeichnet, daß eine Ventilvorrichtung zur Überwachung von mindestens einer ersten und mindestens einer zweiten Leitung (14, 15) vorgesehen ist, mit denen das hydraulische Maschinenaggregat (16) an die Steuereinrichtung (10) angeschlossen ist, daß die Ventilvorrichtung für jede Leitung einen zum Maschinenaggregat und einen zur Steuereinrichtung führenden Zweig (22, 24; 23, 25) enthält, zwischen denen eines der Halteventile (17) angeordnet ist, welches den zum Maschinenaggregat führenden Zweig (22, 24) auf einen Mindestdruck einstellt, bei dessen Unterschreitung einer der Druckmeßwertgeber (18) ein. Überwachungssignal abgibt, und daß die Ventilvorrichtung einen plattenförmigen Block (20) bildet, in welchem die Zweige (21-24) jeder Leitung (14, 15) unter einem Winkel zueinander auf das zugehörige Halteventil (17) zulaufen, wobei die zu der Steuereinrichtung führenden Zweige (21, 23) in einander gegenüberliegenden Schmalseiten (25, 26) und die zu dem Maschinenaggregat führenden Zweige (22, 24) in eine gemeinsame dritte Schmalseite (27) des Blocks eintreten, und wobei ferner die Zweige (21, 22) der ersten Leitung (14) zu denen (23, 24) der zweiten Leitung (15) sowohl in Richtung der einander gegenüberliegenden Schmalseiten (25, 26) als auch quer zum plattenförmigen Block (20) gegeneinander versetzt sind.

10. Antriebssystem nach Anspruch 9, dadurch gekennzeichnet, daß die Zweige (21, 23; 22, 24) jeder Leitung (14, 15) rechtwinklig zueinander verlaufen.

11. Antriebssystem nach Anspruch 9 oder 10, dadurch gekennzeichnet, daß gleiche Zweige (21, 23; 22, 24) der beiden Leitungen (14, 15) parallel zueinander verlaufen.

12. Antriebssystem nach einem der Ansprüche 9 bis 11, dadurch gekennzeichnet, daß die Halteventile (17) in Bohrungen (29, 30) in einer der dritten Schmalseite (27) gegenüberliegenden vierten Schmalseite (28) eingesetzt sind.

13. Antriebssystem nach Anspruch 12, dadurch gekennzeichnet, daß die Bohrungen (29, 30) der Halteventile (17) Fortsetzungen der zu dem Maschinenaggregat führenden Zweige (22, 24) bilden.

14. Antriebssystem nach einem der Ansprüche 9 bis 13, dadurch gekennzeichnet, daß die Druckmeßwertgeber (18) an einer derjenigen Schmalseiten (25, 26) angeordnet sind, in die mindestens einer der zur Steuereinrichtung führenden Zweige (21, 23) eintritt.

## Claims

1. Method of operating a hydraulic machine unit which is selectively connected by means of at least one conduit to a tank or a pump, whereby the pressure in the conduit falls to a residual pressure when the conduit is connected to the tank during idling of the machine, characterised in that the pressure drop which occurs when the conduit is connected to the tank is limited to a desired residual pressure, that the actual residual pressure in the conduit is measured and compared with the desired residual pressure and that a leak is indicated when the actual residual pressure sinks below the desired residual pressure.

2. Hydraulic drive system for working machines with a tank, a pump connected thereto and conduits leading to a machine unit for the supply and return of the hydraulic fluid, the conduits starting from a control device, characterised in that arranged in each conduit (14,15) leading to a machine unit (16) there is a holding valve (17) with an opening pressure set to correspond to at least the biasing pressure prevailing in the conduits during idling of the machine and a pressure sensor (18) between each holding valve (17) and the machine unit (16), whereby the determined measured value is transmitted to a device (19) for comparing the actual value with the predetermined opening pressure as a desired pressure value.

3. Drive system as claimed in claim 2, characterised in that a plurality of holding valves (17) and pressure sensors (18) are arranged in a conduit (14,15) leading to a machine unit (16) to form conduit sections connected in series.

4. Drive system as claimed in claim 2 or 3, characterised in that arranged after each branching of a conduit (14,15) there is a holding valve (17) with a pressure sensor (18) connected downstream of it.

5. Drive system as claimed in one of claims 2 to 4, characterised in that arranged in each conduit (14,15) leading away from the control device (10) there is a respective holding valve (17) with a pressure sensor (18) connected to it.

6. Drive system as claimed in one of claims 2 to 5, characterised in that the opening pressure predetermined in the device (19) as a desired value corresponds to the biasing pressure prevailing during idling of the machine.

7. Drive system as claimed in one of claims 2 to 6, characterised in that the device (19) causes the production of an acoustic signal at a predetermined deviation of the desired/actual values.

8. Drive system as claimed in one of claims 2 to 7, characterised in that the device (19) produces an optical signal for failure indication at a predetermined deviation of the desired/actual values.

9. Drive system as claimed in one of claims 2 to 8, characterised in that a valve device is provided for monitoring at least one first and at least one second conduit (14,15), with which the hydraulic machine unit (16) is connected to the control device (10), that the valve device for each conduit includes a branch (22,24;23,25) leading to the machine unit and to the control device, between which one of the holding valves (17) is arranged which sets the branch (22,24) leading to the machine unit at a minimum pressure and when the measured value falls below this one of the pressure sensors (18) produces a monitoring signal and that the valve device constitutes a plate-shaped block (20) in which the branches (21-24) of each conduit (14,15) extend towards the associated holding valve (17) at an angle to one another, whereby the branches (21,23) leading to the control device pass into mutually opposing narrow sides (25,26) and the branches (22,24) leading to the machine unit pass into a common third narrow side (27) of the block and whereby further the branches (21,22) of the first conduit (14) are offset from one another with respect to those (23,24) of the second conduit (15) both in the direction of the mutually opposing narrow sides (25,26) and also transverse to the plate-shaped block (20).

10. Drive system as claimed in claim 9, characterised in that the branches (21,23;22,24) of each conduit (14,15) extend at right-angles to one another.

11. Drive system as claimed in claim 9 or 10, characterised in that the same branches (21,23;22,24) of the two conduits (14,15) extend parallel to one another.

12. Drive system as claimed in one of claims 9 to 11, characterised in that the holding valves (17) are inserted into bores (29,30) in a fourth narrow side (28) opposed to the third narrow side (27).

13. Drive system as claimed in claim 12, characterised in that the bores (29,30) of the holding valves (17) constitute continuations of the branches (22,24) leading to the machine unit.

14. Drive system as claimed in one of claims 9 to 13, characterised in that the pressure sensors (18) are arranged on one of those narrow sides (25,26) into which at least one of the branches (21,23) leading to the control device passes.

## Revendications

1. Procédé de fonctionnement d'un groupe de machines hydrauliques, reliées par l'intermédiaire d'au moins une conduite, de façon sélectionnée, à un réservoir ou à une pompe, la pression dans la conduite diminuant jusqu'à atteinte d'une pression résiduelle, lorsque la conduite a été raccordée au réservoir pendant la marche à vide de la machine,
caractérisé en ce que la chute de pression se produisant lors du raccordement de la conduite au réservoir est limitée à une pression résiduelle de consigne, en ce que la pression résiduelle réelle dans la conduite est mesurée et comparée à la pression résiduelle de consigne et un affichage d'occurrence de fuite étant produit en cas de diminution de la pression résiduelle réelle à une valeur inférieure à la pression résiduelle de consigne.

2. Système d'entraînement hydraulique pour machines motrices avec un réservoir, une pompe y étant raccordée et des conduites menant à un groupe de machines, pour l'envoi et le retour du liquide hydraulique, les conduites partant d'un dispositif de commande, caractérisé en ce que, dans chaque conduite (14, 15) menant au groupe de machines (16), sont disposés une soupape de retenue (17), avec une pression d'ouverture réglée correspondant au moins à la pression de précontrainte régnant dans les conduites lors de la marche à vide de la machine, ainsi qu'un transducteur de pression (18) entre chaque soupape de retenue (17) et le groupe de machines (16), la valeur de mesure déterminée étant transmise à un dispositif (19) pour comparer la valeur réelle à la pression d'ouverture prédéterminée à titre de valeur de consigne de pression.

3. Système d'entraînement selon la revendication 2, caractérisé en ce que plusieurs soupapes de retenue (17) et transducteurs de pression (18) sont disposés dans une conduite (14, 15) menant à un groupe de machines (16) en formant des tronçons de conduite mis en circuit en série.

4. Système d'entraînement selon la revendication 2 ou 3, caractérisé en ce qu'après chaque ramification d'une conduite (14, 15) est disposée une soupape de retenue (17), avec un transducteur de pression (18) mis en circuit en aval.

5. Système d'entraînement selon l'une des revendications 2 à 4, caractérisé en ce qu'une soupape de retenue (17) avec un transducteur de pression (19) connecté est disposée dans chaque conduite (14, 15) partant du dispositif de commande (10).

6. Système d'entraînement selon l'une des revendications 2 à 5, caractérisé en ce que la pression d'ouverture prédéterminée comme valeur de consigne dans le dispositif (19) correspond à la pression de précontrainte lors de la marche à vide de la machine.

7. Système d'entraînement selon l'une des revendications 2 à 6, caractérisé en ce que le dispositif (19) provoque l'émission d'un signal acoustique en cas de constatation d'un écart entre la valeur réelle et la valeur de consigne.

8. Système d'entraînement selon l'une des revendications 2 à 7, caractérisé en ce que le dispositif (19) envoie un signal optique d'identification d'erreur en cas de constatation d'un écart entre la valeur de consigne et la valeur réelle.

9. système d'entraînement selon l'une des revendications 2 à 8, caractérisé en ce qu'un dispositif à soupape destiné à la surveillance d'au moins une première et d'au moins une deuxième conduite (14, 15) est prévu, conduites à l'aide desquelles le groupe de machines hydrauliques (16) est raccordé au dispositif de commande (10), en ce que le dispositif à soupape comporte, pour chaque conduite, une ramification (22, 24; 23, 25) menant au groupe de machines et une ramification menant au dispositif de commande, l'une des soupapes de retenue (17) étant disposée entre elles et réglant la ramification (22, 24) menant au groupe de machines à une pression minimale, au-dessous de laquelle l'un des transducteurs de pression (18) envoie un signal de surveillance, et en ce que le dispositif à soupape forme un bloc (20) se présentant sous la forme d'une plaque, dans laquelle les ramifications (21 à 24) de chaque conduite (14, 15) partent en faisant entre elles un angle sur la soupape de retenue (17) correspondante, les ramifications (21, 23) menant au dispositif de commande pénétrant dans des côtés étroits (25, 26) mutuellement opposés et les ramifications (22, 24) menant au groupe de machines pénétrant dans un troisième côté étroit (27) commun du bloc, et où, en outre, les ramifications (21, 22) de la première conduite (14) sont décalées tant par rapport à celles (23, 24) de la deuxième conduite (15), tant en direction des côtés étroits (25, 26) mutuellement opposés qu'également les unes par rapport aux autres transversalement par rapport au bloc (20) en forme de plaque.

10. Système d'entraînement selon la revendication 9, caractérisé en ce que les ramifications (21, 23; 22, 24) de chaque conduite (14, 15) s'étendent mutuellement à angle droit.

11. Système d'entraînement selon la revendication 9 ou 10, caractérisé en ce que des ramifications (21, 23; 22, 24) identiques des deux conduites (14, 15) s'étendent parallèlement les unes aux autres.

12. Système d'entraînement selon l'une des revendications 9 à 11, caractérisé en ce que les soupapes de retenue (17) sont insérées dans des perçages (29, 30) ménagés dans un quatrième côté étroit (28) opposé au troisième côté étroit (27).

13. Système d'entraînement selon la revendication 12, caractérisé en ce que les perçages (29, 30) des soupapes de maintien (17) constituent des prolongements des ramifications (22, 24) menant au groupe de machines.

14. Système d'entraînement selon l'une des revendications 9 à 13, caractérisé en ce que les transducteurs de pression (18) sont disposés sur l'un des côtés étroits (25, 26) dans lesquels pénètre au moins l'une des ramifications (21, 23) menant au dispositif de commande.
